# EUROPÄISCHE PATENTSCHRIFT

(11) **EP 3 721 040 B1**
(45) Veröffentlichungstag und Bekanntmachung des Hinweises auf die Patenterteilung: **16.11.2022**
(21) Anmeldenummer: 18815972.7
(22) Anmeldetag: 03.12.2018
(51) Int. Cl.: E06B 3/22

(54) **HOHLKAMMERPROFIL, INSBESONDERE FENSTER- ODER TÜRPROFIL**
HOLLOW PROFILE, IN PARTICULAR WINDOW PROFILE OR DOOR PROFILE
PROFILÉ CREUX, EN PARTICULIER PROFILÉ DE FENÊTRE OU DE PORTE

(30) Priorität: 06.12.2017 DE 202017107427 U
(43) Veröffentlichungstag der Anmeldung: 14.10.2020
(73) Patentinhaber: REHAU Industries SE & Co. KG, 95111 Rehau (DE)
(72) Erfinder: ECKERT, Stefan, 91301 Forchheim (DE); MELZER, Klaus, 91099 Poxdorf (DE); TIPPENHAUER, Horst, 91080 Marloffstein (DE); NÄGEL, Bernhard, 91301 Forchheim (DE)
(86) Internationale Anmeldenummer: PCT/EP2018/083280
(87) Internationale Veröffentlichungsnummer: WO 2019/110472

(56) Entgegenhaltungen:
- EP-A1- 0 087 515
- EP-A1- 2 982 498
- WO-A1-2006/051084

## Beschreibung

Die vorliegende Erfindung betrifft ein Hohlkammerprofil, insbesondere Fenster- oder Türprofil, aus thermoplastischem Kunststoff mit einer wetterseitigen Außenwand und einer raumseitigen Außenwand und wenigsten einer an die Wetterseite angrenzenden Hohlkammer, wobei die wetterseitige Außenwand einen ersten thermoplastischen Kunststoff A umfasst und mindestens eine andere Wandung des Hohlkammerprofils einem zweiten thermoplastischen Kunststoff B umfasst.

Hohlkammerprofile aus thermoplastischem Kunststoff werden in großem Umfang zur Herstellung von Kunststofffenstern und Kunststofftüren eingesetzt. Diese Profile werden ganz überwiegend durch Extrusion aus Hart-PVC (PVC-U) hergestellt. Sie weisen in der Regel mehrere Hohlkammern auf, die durch Innenstege voneinander abgegrenzt sind. Dabei wird ein überwiegender Teil der Kunststofffenster und Kunststofftüren weiß erzeugt. Aus ästhetischen Gründen werden jedoch zunehmend Kunststofffenster eingesetzt, die zumindest an ihrer Augenseite farbig ausgestaltet oder mit einem Dekor versehen sind.

Während ihrer Verwendung sind Kunststoff- Hohlkammerprofile häufig einer klimatischen Belastung ausgesetzt, die verstärkt oder ausschließlich auf einer Seite des Profils auftritt. Beispielsweise wird die Wetterseite (die zur Außenseite eines Gebäudes weisende Seite) eines Fenster- oder Türprofils der Sonneneinstrahlung ausgesetzt, während auf die Raumseite (die der Wetterseite gegenüberliegende Seite) des Profils keine direkte oder kaum Sonneneinstrahlung auftrifft. Insbesondere bei groß dimensionierten und/oder farbigen Kunststofffenstern und -türen tritt aufgrund der einseitigen Sonneneinstrahlung auf das betreffende Profil im Laufe der Zeit insbesondere eine Wölbung der Flügel quer zur Längsrichtung der Kunststoff-Hohlprofile auf. Diese Deformation kann dazu führen, dass sich das betroffene Fenster bzw. die betroffene Tür nur schwer oder überhaupt nicht mehr schließen lässt. Da ein Nachjustieren der Fenster bzw. Türen nicht möglich ist, ist in derartigen Fällen bislang der Ersatz des betroffenen Flügels erforderlich.

Die Herstellung farbiger Hohlkammerprofile kann beispielsweise mittels durchgefärbter PVC-Massen für die Extrusion, Aufbringen farbiger Lackierungen auf die Außenseite des Hohlkammerprofils, Aufbringen von Farb- oder Dekorfolien auf die Außenseite des Hohlkammerprofils oder Coextrusion einer eingefärbten Außenschicht (meist aus PMMA) auf dem Grundhohlkammerprofil aus PVC-U erfolgen. Ein Hohlkammerprofil mit einer zumindest teilweise vorhandenen Außenschicht aus PMMA ist aus der EP 0 087 515 A1 bekannt.

Insbesondere bei dunkel gefärbten Hohlkammerprofile heizt sich insbesondere die dem Sonnenlicht ausgesetzte Außenseite des Hohlkammerprofils auf Temperaturen in der Nähe der Vicat-Erweichungstemperatur, die bei dem üblicherweise für Hohlkammerprofile eingesetzten Hart-PVC (PVC-U) bei etwa 80°C liegt. Dadurch kann es zu einem Verzug insbesondere des Fensterflügels oder zu einer Schwächung der statischen Eigenschaften des aus den Hohlkammerprofilen gebildeten Rahmen aufgrund eines gesunkenen E-Moduls kommen.

Zur Lösung dieses Problems schlägt die WO 2006/051084 A1 vor, im Coextrusionsverfahren ein Hohlkammerprofils herzustellen, bei dem die der Sonnenstrahlung ausgesetzte, wetterseitige Außenwand des Hohlkammerprofils aus einem Kunststoff mit höherer Vicat-Erweichungstemperatur besteht. Dabei werden gemäß der WO 2006/051084 A1 als Kunststoffe mit höherer Vicat-Erweichungstemperatur gemäß der WO 2006/051084 A1 insbesondere Acrylnitril-Butadien-Styrol-Copolymerisat (ABS), Acrylnitril-Styrol-Acrylester-Copolymer (ASA) und nachchloriertes PVC (PVC-C) sowie Mischungen dieser Polymere untereinander und mit Hart-PVC (PVC-U) verwendet. Nachteilig an den so erhaltenen Hohlkammerprofilen wird jedoch gesehen, dass diese Kunststoffe insbesondere bei starker Sonneneinstrahlung zu Verfärbungen neigen, so dass die in der WO 2006/051084 A1 beschriebene Vorgehensweise für ungefärbte, also weiße Hohlkammerprofile ungeeignet ist.

Darüber hinaus beschreibt die EP 2 982 498 A1 ein Verfahren zur Herstellung von Hohlkammerprofilen, die mehrere Hohlkammern, eine äußere Sichtfläche und eine innere Sichtfläche aufweisen, bei dem ein thermoplastischer Kunststoff zu dem Hohlkammerprofil extrudiert, kalibriert, abgekühlt und anschließend getempert wird, wobei die Temperung durch Erwärmen der äußeren Sichtfläche und der inneren Sichtfläche wenigstens in Teilbereichen derart erfolgt, dass die äußere Sichtfläche und die innere Sichtfläche in erwärmten Teilbereichen eine Temperatur oberhalb der Vicat-Erweichungstemperatur des thermoplastischen Kunststoffs erreicht und der überwiegende Teil der anderen Profilbereiche eine Temperatur unterhalb der Vicat-Erweichungstemperatur aufweist.

An dieser Stelle setzt die vorliegende Erfindung ein, der die Aufgabe zugrunde liegt, ein Hohlkammerprofil zur Verfügung zu stellen, das die Nachteile des Stands der Technik überwindet. Insbesondere soll das erfindungsgemäße Hohlkammerprofil bei starker Sonneneinstrahlung nicht zu einer Verformung des Hohlkammerprofils neigen. Darüber hinaus soll das erfindungsgemäße Hohlkammerprofil bei starker Sonneneinstrahlung auch nicht zu einer von außen sichtbaren Verfärbung des Profils neigen, so dass das erfindungsgemäße Hohlkammerprofil auch als weißes Profil eingesetzt werden kann.

Diese und andere Aufgaben werden erfindungsgemäß durch ein Hohlkammerprofil mit den Merkmalen des Anspruchs 1 gelöst. Bevorzugte Ausführungsformen des erfindungsgemäßen Hohlkammerprofils sind in den abhängigen Ansprüchen beschrieben.

Gemäß der vorliegenden Erfindung wurde überaschenderweise erkannt, dass es für die Formstabiliät von Hohlkammerprofilen bei starker Sonneneinstrahlung ausreichend ist, wenn das Hohlkammerprofil an der wetterseitigen Außenwand einen thermoplastischen Kunststoff umfasst, dessen Vicat-Erweichungstemperatur mindestens fünf Kelvin (K) niedriger ist als die Vicat-Erweichungstemperatur des thermoplastischen Kunststoffs, aus dem andere Profilwände des erfindungsgemäßen Hohlkammerprofils gebildet sind. Damit kann als thermoplastischer Kunststoff an der wetterseitigen Außenwand des erfindungsgemäßen Hohlkammerprofils Hart-PVC eingesetzt werden, das bei starker Sonneneinstrahlung zu weniger Verfärbungen neigt. Die Erfindung nimmt dabei bewusst in Kauf, dass sich die der Sonnenbestrahlung ausgesetzte Außenwandung des erfindungsgemäßen Hohlkammerprofils auf Temperaturen in der Nähe der Vicat-Erweichungstemperatur des diese Profilwand bildenden thermoplastischen Kunststoffs aufheizen kann. Da das erfindungsgemäße Hohlkammerprofil in anderen Profilbereichen einen thermoplastischen Kunststoff mit höherer Vicat-Erweichungstemperatur und damit höherer Wärmeformbeständigkeit aufweist, ist die Gefahr eines Verzuges des Profils erheblich verringert.

Dementsprechend liegt der vorliegenden Erfindung in der Bereitstellung eines Hohlkammerprofils, insbesondere eines Fenster- oder Türprofils, aus thermoplastischem Kunststoff mit einer wetterseitigen Außenwand, einer raumseitigen Außenwand und wenigsten einer an die Wetterseite angrenzenden Hohlkammer, wobei die wetterseitige Außenwand einen ersten thermoplastischen Kunststoff A umfasst und mindestens eine andere Wandung des Hohlkammerprofils einem zweiten thermoplastischen Kunststoff B umfasst, wobei der zweite thermoplastische Kunststoff B eine um wenigstens 5 K höhere Vicat-Erweichungstemperatur, gemessen nach DIN EN ISO 306 (B 50), aufweist als der erste thermoplastische Kunststoff A und der zweite thermoplastische Kunststoff B eine Vicat-Erweichungstemperatur, gemessen nach DIN EN ISO 306 (B 50), von mindestens 85°C besitzt, sich das Hohlkammerprofil erfindungsgemäß dadurch auszeichnet, dass die wetterseitige Außenwand vollständig aus dem ersten thermoplastischen Kunststoff A gebildet ist oder die wetterseitige Oberfläche der wetterseitigen Außenwand von einer Schicht aus dem ersten thermoplastischen Kunststoff A gebildet ist.

Wie hierin verwendet, beschreibt der Begriff "Vicat-Erweichungstemperatur" eines thermoplastischen Kunststoffs die nach dem Verfahren B50 gemäß DIN EN ISO 306 gemessene Vicat-Erweichungstemperatur. Darüber hinaus beschreibt der Begriff "wetterseitige Außenwand" wie hierin verwendet diejenige Wand des erfindungsgemäßen Hohlkammerprofils, die beim bestimmungsgemäßen Einsatz des erfindungsgemäßen Hohlkammerprofils zur Außenseite des Gebäudes weist. Dementsprechend beschreibt der Begriff "raumseitige Außenwand" (die der Wetterseite gegenüberliegende Seite) wie hierin verwendet diejenige Wand des erfindungsgemäßen Hohlkammerprofils, die beim bestimmungsgemäßen Einsatz des erfindungsgemäßen Hohlkammerprofils zur Raumseite des Fensters bzw. der Tür weist, die das erfindungsgemäße Hohlkammerprofil umfasst.

Erfindungsgemäß besitzt der zweite thermoplastische Kunststoff B eine Vicat-Erweichungstemperatur, gemessen nach DIN EN ISO 306 (B 50), von mindestens 85°C. Im Profilinneren wird derzeit Hart-PVC (PVC-U) eingesetzt, das eine Vicat-Erweichungstemperatur von etwa 80°C besitzt. Bereits eine Erhöhung der Vicat-Erweichungstemperatur um 5°C hat sich als dazu ausreichend erwiesen, einen genügenden Abstand zwischen der Vicat-Erweichungstemperatur und den tatsächlich im Profilinneren auftretenden Temperaturen zu schaffen, um die Stabilität des erfindungsgemäßen Hohlkammerprofils zu gewährleisten.

Gemäß der vorliegenden Erfindung ist die wetterseitige Außenwand vollständig aus dem ersten thermoplastischen Kunststoff A gebildet. So ist gewährleistet, dass sich an der Oberfläche der wetterseitigen Außenwand der erste thermoplastische Kunststoff A, der über bessere Witterungseigenschaften verfügt, so dass eine Verfärbung der wetterseitigen Außenwand auch bei starker Sonneneinstrahlung reduziert ist. Alternativ dazu ist lediglich die wetterseitige Oberfläche der wetterseitigen Außenwand von einer Schicht aus dem ersten thermoplastischen Kunststoff A gebildet. Die übrige Wandstärke der wetterseitigen Außenwand kann dabei aus dem zweiten thermoplastischen Kunststoff B gebildet sein. Bei hoher Temperaturstabilität des erfindungsgemäßen Hohlkammerprofils kann auf diese Weise eine Verfärbung der wetterseitigen Außenwand auch bei starker Sonneneinstrahlung wirksam verhindert werden.

Es kann auch bevorzugt sein, wenn der zweite thermoplastische Kunststoff B ein Kernprofil bildet, das zumindest an der wetterseitigen Oberfläche der wetterseitigen Außenwand aus dem ersten thermoplastischen Kunststoff A überdeckt ist. Bevorzugt ist auch an der raumseitigen Oberfläche der raumseitigen Außenwand eine Deckschicht aus dem ersten thermoplastischen Kunststoff A ausgebildet. Bevorzugt weist die Deckschicht eine Dicke im Bereich von etwa 0,3 mm bis etwa 1,5 mm, insbesondere etwa 0,4 mm bis etwa 1,2 mm, besonders bevorzugt von etwa 0,5 mm, auf.

In besonders bevorzugten Ausführungsformen des erfindungsgemäßen Hohlkammerprofils umfasst der thermoplastische Kunststoff B Verstärkungsfasern. Derartige faserverstärke thermoplastische Kunststoffe besitzen einen besonders hohen E-Modul, was dem erfindungsgemäßen Hohlkammerprofil auch bei starker Sonneneinstrahlung eine hohe mechanische Stabiltät verleiht. So können erfindungsgemäße Hohlkammerprofil auch ohne den Einsatz weiterer Armierungsprofile eingesetzt werden. Als Verstärkungsfasern werden bevorzugt Glasfasern eingesetzt. Alternativ können auch organische Fasern auf Polymerbasis, insbesondere aus PAN (Polyacrylnitril), Carbonfasern oder Naturfasern wie Hanf oder Sisal eingesetzt werden. Der Anteil der Verstärkungsfasern in dem zweiten thermoplastischen Kunststoff B beträgt höchstens 50 Gew.-Teile, aufgrund der besseren Verschweißbarkeit bevorzugt von höchstens 25 Gew.-Teile, stärker bevorzugt von höchstens 20 Gew.-Teile und noch mehr bevorzugt von höchstens 15 Gew.-Teilen, jeweils bezogen auf 100 Gew.-Teile des Kunststoffmaterials im Rahmenprofil. Ein derartiger Anteil an Verstärkungsfasern erlaubt noch eine ausreichend gute Verschweißbarkeit des Materials. Vorzugsweise beträgt die maximale Länge der Verstärkungsfasern etwa 10mm, insbesondere etwa 5 mm und bevorzugt etwa 1,5 mm. Derartige Faserlängen haben sich zur Bereitstellung einer koextrudierbaren faserverstärkten Kunststoffkomponente, die nach dem Aushärten zu einer stabilen Armierungskomponente führt, als besonders geeignet herausgestellt. Eine mittlere Faserlänge von 0,1 mm bis 3 mm, insbesondere von 0,3 mm bis 1,5 mm und bevorzugt von 0,4 mm bis 0,6 mm, insbesondere etwa 0,5 mm, hat sich in diesem Zusammenhang als besonders günstig erwiesen.

Bevorzugt ist der erste thermoplastische Kunststoff A Hart-PVC (PVC-U). PVC-U weist eine Vicat-Erweichungstemperatur (gemessen nach DIN EN ISO 306 (B50)) von etwa 80°C auf. Der zweite thermoplastische Kunststoff B ist bevorzugt ausgewählt aus der Gruppe, bestehend aus Acrylnitril-Butadien-Styrol-Copolymerisat (ABS), Acrylnitril-Styrol-Acrylester-Copolymer (ASA), nachchloriertem PVC (PVC-C), Styrol-Acrylnitril-Copolymer (SAN), hochschlagfestem Polystyrol (HIPS), Methylmethacrylat-Acrylnitril-Butadien-StyrolCopolymer (MABS), Styrol-Butadien-Blockcopolymeren (SBS), Polycarbonaten (PC), Polymethylmethacrylat (PMMA), Mischungen dieser Polymere untereinander und Mischungen eines oder mehrerer dieser Polymere mit PVC-U. Dabei sind ABS, ASA und PVC-C insbesondere wegen der guten Bruchdehnungseigenschaften besonders bevorzugt. ASA und ABS besitzen eine Vicat-Erweichungstemperatur (gemessen nach DIN EN ISO 306 (B50)) von etwa 100°C. Daher weist der thermoplastische Kunststoff B eine um wenigstens 15 K höhere Vicat-Erweichungstemperatur, gemessen nach DIN EN ISO 306 (Verfahren B 50), als der thermoplastische Kunststoff A auf. Sowohl dem ersten thermoplastischen Kunststoff A als auch dem zweiten thermoplastischen Kunststoff B können ergänzend Zusatzstoffe wie z. B. Stabilisatoren, Weichmacher, Pigmente, insbesondere Weißpigmente, und dergleichen zugesetzt sein.

Besonders bevorzugt lässt sich das erfindungsgemäße Hohlkammerprofil in an sich bekannter Weise durch Coextrusion des ersten thermoplastischen Kunststoffs A und des zweiten thermoplastischen Kunststoffs B herstellen. Es ist aber auch denkbar, dass die Profilanteile aus dem ersten thermoplastischen Kunststoff A und die Profilanteile aus dem zweiten thermoplastischen Kunststoff B zunächst getrennt voneinander extrudiert und dann beispielsweise durch Verschweißen, Verkleben oder Verrasten miteinander unter Bildung des erfindungsgemäßen Hohlkammerprofils verbunden werden.

Die wetterseitige Außenwand und/oder die raumseitige Außenwand kann/können bevorzugt dunkel eingefärbt und/oder mit einer dunklen Folie, Farbe oder Beschichtung versehen und/oder mit einer dunklen Schicht coextrudiert sein. Zwar lässt sich die vorliegende auch auf nicht gefärbte weiße Hohlkammerprofile anwenden, jedoch tritt die Problematik der Profilverformung bei dunkeln Außenwänden verstärkt auf. Wie hierin verwendet, bedeutet der Begriff "dunkel", dass durch die dunkle Färbung mehr als 50 %, bevorzugt mehr als 60 % des senkrecht einfallenden Sonnenlichtes, jeweils einschließlich des relevanten IR-Bereiches, absorbiert werden.

Bevorzugt werden die erfindungsgemäßen Hohlkammerprofile zur Herstellung eines Kunststoff-Fensters oder einer Kunststoff-Tür verwendet. Durch Verschweißen von auf Gehrung geschnittenen Stücken eines erfindungsgemäßen Hohlkammerprofils kann ein Fenster- oder Türrahmen erhalten werden. Der erfindungsgemäße Fenster- oder Türrahmen ist für den Einbau in eine Öffnung einer Wandung eines Gebäudes vorgesehen bzw. in die Öffnung der Wandung eines Gebäudes einbaubar.

Das erfindungsgemäße extrudierte Fenster- oder Türprofil sowie einzelne Teile davon können auch zeilenweise oder schichtweise unter Verwendung eines zeilenaufbauenden oder schichtaufbauenden Fertigungsverfahrens (z. B. 3D-Druck) hergestellt werden, bevorzugt ist jedoch die Herstellung mittels Coextrusion.

Im Folgenden soll die vorliegende Erfindung unter Bezugnahme auf die in den Figuren dargestellten Ausführungsformen im Detail erläutert werden. Dabei zeigen
- Figur 1: eine Querschnittsdarstellung eines extrudierten Fensterflügelprofils gemäß einer Ausführungsform der vorliegenden Erfindung; und
- Figur 2: eine Querschnittsdarstellung eines extrudierten Fensterflügelprofils gemäß einer weiteren Ausführungsform der vorliegenden Erfindung.

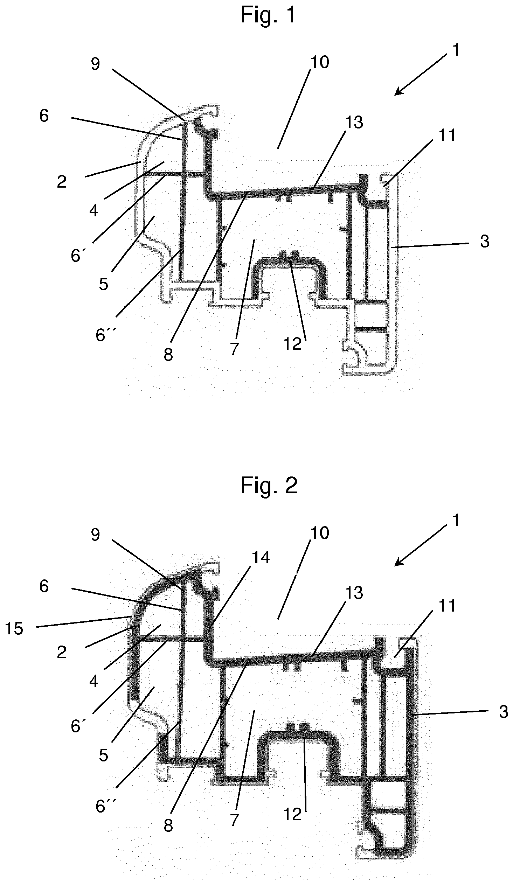

In Figur 1 ist eine Ausführungsform des erfindungsgemäßen Hohlkammerprofils 1 am Beispiel eines Flügelprofils für ein Kunststofffenster in einer Querschnittsdarstellung gezeigt. Das erfindungsgemäße Hohlkammerprofil 1 umfasst eine wetterseitige Außenwand 2 und eine raumseitigen Außenwand 3. An die wetterseitige Außenwand 2 grenzen zwei Hohlkammern 4, 5 an, die von als Stegen ausgebildeten Wandungen 6, 6',6" und der wetterseitigen Außenwand 2 begrenzt sind. Zentral umfasst das erfindungsgemäße Hohlkammerprofils 1 eine Haupthohlkammer 7, in der ein Armierungselement (nicht dargestellt), beispielsweise eine Stahlarmierung aufgenommen werden kann. Der obere Steg 8 der Haupthohlkammer 7 bildet zusammen mit einem Außenüberschlag 5 einen Falzbereich 10, in den ein nicht dargestelltes Flächenelement, insbesondere eine Isolierverglasung, aufgenommen werden kann. Das Flächenelement wird durch eine Glasleiste (nicht dargestellt) stabilisiert, die in einer Glasleistennut 11 des erfindungsgemäßen Hohlkammerprofils 1 verankerbar ist. Die in Fig. 1 unten angeordnete Außenwand 12 des erfindungsgemäßen Hohlkammerprofils 1 wird als beschlagseitige Profilaußenwand 12 bezeichnet, während man bei der der Beschlagseite gegenüberliegenden Seite von der Falzseite mit einer falzseitigen Profilaußenwand 13 spricht.

In der in Fig. 1 dargestellten Ausführungsform des erfindungsgemäßen Hohlkammerprofils 1 ist die wetterseitige Außenwand 2 vollständig, die raumseitige Außenwand 3 vollständig sowie die beschlagseitige Profilaußenwand 12 teilweise aus einem ersten thermoplastischen Kunststoff A gebildet, der in Fig. 1 weiß wiedergegeben ist. Bei dem ersten thermoplastischen Kunststoff A handelt es sich um Hart-PVC, dem zusätzlich Zusatzstoffe wie z. B. Stabilisatoren, Weichmacher, Pigmente und dergleichen zugesetzt sind. Das Hart-PVC besitzt eine Vicat-Erweichungstemperatur von 80°C (gemessen nach DIN EN ISO 306 (B 50)).

Die übrigen Wandungen des erfindungsgemäßen Hohlkammerprofils 1, einschließlich einer zur Haupthohlkammer 7 gerichteten Schicht der beschlagseitigen Profilaußenwand 12 und der falzseitigen Profilaußenwand 13 sind aus einem zweiten thermoplastischen Kunststoff B gebildet, der in Fig. 1 schwarz wiedergegeben ist. Bei dem zweiten thermoplastischen Kunststoff B handelt es sich um Acrylnitril-Styrol-Acrylester-Copolymer (ASA), dem zusätzlich Zusatzstoffe wie z. B. Stabilisatoren, Weichmacher, Pigmente und dergleichen zugesetzt sind. Das ASA besitzt eine Vicat-Erweichungstemperatur von 100°C (gemessen nach DIN EN ISO 306 (B 50)). Durch die Anordnung des Hart-PVC an der wetterseitigen Profilaußenwand 2 ist gewährleistet, dass eine Verfärbung der wetterseitigen Profilaußenwand 2 auch bei starker Sonneneinstrahlung reduziert ist, während das ASA im Inneren des erfindungsgemäßen Hohlkammerprofils 1 für eine hohe mechanische Stabilität auch bei durch starke Sonneneinstrahlung bewirkter, hoher thermischer Belastung sorgt. Das erfindungsgemäße Hohlkammerprofil 1 ist in an sich bekannter Weise durch Coextrusion des ersten thermoplastischen Kunststoffs A und des zweiten thermoplastischen Kunststoffs B hergestellt.

In der in Fig. 1 dargestellten Ausführungsform des erfindungsgemäßen Hohlkammerprofils 1 ist das gesamte Hohlkammerprofil 1 weiß gefärbt, was durch Zusatz von Weißpigmenten zu den thermoplastischen Kunststoffen A und B erfolgt. In alternativen Ausführungsformen können insbesondere die wetterseitige Außenwand 2 und/oder die raumseitige Außenwand 3 vorzugsweise dunkel eingefärbt und/oder mit einer dunklen Folie, Farbe oder Beschichtung versehen und/oder mit einer dunklen Schicht coextrudiert sein.

In Fig. 2 ist eine weitere Ausführungsformen des erfindungsgemäßen Hohlkammerprofils 1 gezeigt. Um Wiederholungen zu vermeiden, werden daher im Folgenden nur Unterschiede zu der in Fig. 1 dargestellten Ausführungsform des erfindungsgemäßen extrudierten Hohlkammerprofils 1 beschrieben. Die Ausführungsformen zu Fig. 1 gelten auch für die Ausführungsform gemäß Fig. 2 entsprechend. Gleiche Elemente sind in den Abbildungen durch identische Bezugszeichen gekennzeichnet.

In Fig. 2 ist eine weitere Ausführungsform des erfindungsgemäßen des erfindungsgemäßen Hohlkammerprofils 1 ebenfalls am Beispiel eines Flügelprofils für ein Kunststofffenster in einer Querschnittsdarstellung gezeigt. Die in Fig. 2 dargestellte Ausführungsform unterscheidet sich von der zu Fig. 1 beschriebenen Ausführungsform hinsichtlich der Verteilung des ersten thermoplastischen Kunststoffs A und des zweiten thermoplastischen Kunststoffs B über den Profilquerschnitt. So bildet in der in Fig. 2 dargestellten Ausführungsform der zweite thermoplastische Kunststoffs B ein Kernprofil 14. Das Kernprofil bildet dabei die Innenwände und die falzseitige Profilaußenwand 13 vollständig, sowie teilweise zur Profilinnenseite gerichtet die wetterseitige Außenwand 2 und die raumseitige Außenwand 3.

In der dargestellten Ausführungsform handelt es sich bei dem zweiten thermoplastischen Kunststoffs B um nachchloriertes PVC (PVC-C), dem zusätzlich Zusatzstoffe wie z. B. Stabilisatoren, Weichmacher, Pigmente und dergleichen zugesetzt sind. Darüber hinaus umfasst der zweite thermoplastische Kunststoffs B Glasfasern als Verstärkungsfasern in einem Anteil von 18 Gew.-Teilen, bezogen auf 100 Gew.-Teile des zweiten thermoplastischen Kunststoffs B. Das PVC-C besitzt eine Vicat-Erweichungstemperatur von 114°C (gemessen nach DIN EN ISO 306 (B 50)).

An den Sichtflächen ist das Kernprofil 14 von einer etwa 1 mm starken Deckschicht 15 aus dem ersten thermoplastischen Kunststoffs A, bei dem es sich in dieser Ausführungsform wiederum PVC-U mit Vicat-Erweichungstemperatur von 80°C (gemessen nach DIN EN ISO 306 (B 50)) handelt, dem die üblichen Zusatzstoffe wie z. B. Stabilisatoren, Weichmacher, Pigmente und dergleichen zugesetzt sind. Dadurch sind die zur Profilaußenseite gerichteten Oberflächen der wetterseitigen Profilaußenwand 2, der raumseitigen Profilaußenwand 3 und der beschlagseitigen Profilaußenwand 12 sowie einige Nutwände aus dem ersten thermoplastischen Kunststoffs A gebildet. Durch die Anordnung des Hart-PVC an der wetterseitigen Profilaußenwand 2 ist gewährleistet, dass eine Verfärbung der wetterseitigen Profilaußenwand 2 auch bei starker Sonneneinstrahlung reduziert ist, während das nachchlorierte PVC im Inneren des erfindungsgemäßen Hohlkammerprofils 1 für eine hohe mechanische Stabilität auch bei durch starke Sonneneinstrahlung bewirkter, hoher thermischer Belastung sorgt. Das erfindungsgemäße Hohlkammerprofil 1 ist in an sich bekannter Weise durch Coextrusion des ersten thermoplastischen Kunststoffs A und des zweiten thermoplastischen Kunststoffs B hergestellt.

Die vorliegende Erfindung wurde exemplarisch unter Bezugnahme auf Fensterprofile für den Flügelrahmen eines Fensters beschrieben. Es versteht sich, dass die vorliegende Erfindung auch auf andere Hohlkammerprofile, insbesondere Blendrahmenprofile für ein Fenster sowie für Blendrahmen-, Zargen- oder Flügelrahmenprofile einer Tür entsprechend anwendbar ist.

## Patentansprüche

1. Hohlkammerprofil (1), insbesondere Fenster- oder Türprofil, aus thermoplastischem Kunststoff mit einer wetterseitigen Außenwand (2) und einer raumseitigen Außenwand (3) und wenigstens einer an die Wetterseite (2) angrenzenden Hohlkammer (4, 5), wobei die wetterseitige Außenwand (2) einen ersten thermoplastischen Kunststoff A umfasst und mindestens eine andere Wandung (6, 6', 6") des Hohlkammerprofils (1) einem zweiten thermoplastischen Kunststoff B umfasst, wobei der zweite thermoplastische Kunststoff B eine um wenigstens 5 K höhere Vicat-Erweichungstemperatur, gemessen nach DIN EN ISO 306 (B 50), aufweist als der erste thermoplastische Kunststoff A und der zweite thermoplastische Kunststoff B eine Vicat-Erweichungstemperatur, gemessen nach DIN EN ISO 306 (B 50), von mindestens 85°C besitzt.
**dadurch gekennzeichnet, dass**
die wetterseitige Außenwand (2) vollständig aus dem ersten thermoplastischen Kunststoff A gebildet ist oder die wetterseitige Oberfläche der wetterseitigen Außenwand (2) von einer Schicht (15) aus dem ersten thermoplastischen Kunststoff A gebildet ist.

2. Hohlkammerprofil (1) nach Anspruch 1, **dadurch gekennzeichnet, dass** der zweite thermoplastische Kunststoff B ein Kernprofil (14) bildet, das zumindest an der wetterseitigen Oberfläche der wetterseitigen Außenwand (2) und bevorzugt an raumseitigen Oberfläche der raumseitigen Außenwand (3) von einer Deckschicht (14) aus dem ersten thermoplastischen Kunststoff A überdeckt ist.

3. Hohlkammerprofil (1) nach Anspruch 1 oder Anspruch 2, **dadurch gekennzeichnet, dass** der thermoplastische Kunststoff B eine Vicat-Erweichungstemperatur, gemessen nach DIN EN ISO 306 (Verfahren B 50), von mindestens 95°C besitzt und/oder der thermoplastische Kunststoff B eine um wenigstens 15 K höhere Vicat-Erweichungstemperatur, gemessen nach DIN EN ISO 306 (Verfahren B 50), aufweist als der thermoplastische Kunststoff A.

4. Hohlkammerprofil (1) nach einem der Ansprüche 1 bis 3, **dadurch gekennzeichnet, dass** der thermoplastische Kunststoff B Verstärkungsfasern umfasst.

5. Hohlkammerprofil (1) nach einem der Ansprüche 1 bis 4, **dadurch gekennzeichnet, dass** der erste thermoplastische Kunststoff A Hart-PVC (PVC-U) und der zweite thermoplastischem Kunststoff B ausgewählt ist aus der Gruppe, bestehend aus ASA, ABS, nachchloriertem PVC (PVC-C) und Mischungen dieser Polymere, insbesondere mit Hart-PVC (PVC-U).

6. Hohlkammerprofil (1) nach einem der Ansprüche 1 bis 5, **dadurch gekennzeichnet, dass** das Hohlkammerprofil (1) durch Coextrusion des ersten thermoplastischen Kunststoffs A und dem thermoplastischem Kunststoff B hergestellt wurde.

7. Hohlkammerprofil (1) nach einem der Ansprüche 1 bis 6, **dadurch gekennzeichnet, dass** die wetterseitige Außenwand (2) und/oder die raumseitige Außenwand (3) dunkel eingefärbt und/oder mit einer dunklen Folie, Farbe oder Beschichtung versehen und/oder mit einer dunklen Schicht coextrudiert ist/sind.

## Claims

1. Hollow-chamber profile (1), in particular window profile or door profile, of thermoplastic material, having an outer wall (2) that is exposed to the weather and an outer wall (3) that faces a room, and having at least one hollow chamber (4, 5) adjacent to the weather side (2), wherein the outer wall (2) that is exposed to the weather comprises a first thermoplastic material A and at least one other wall (6, 6', 6") of the hollow-chamber profile (1) comprises a second thermoplastic material B, wherein the second thermoplastic material B has a Vicat softening temperature, measured in accordance with DIN EN ISO 306 (B 50), which is at least 5 K higher than that of the first thermoplastic material A, and the second thermoplastic material B has a Vicat softening temperature, measured in accordance with DIN EN ISO 306 (B 50), of at least 85°C,
**characterised in that**
the outer wall (2) that is exposed to the weather is formed wholly of the first thermoplastic material A, or the surface that is exposed to the weather of the outer wall (2) that is exposed to the weather is formed by a layer (15) of the first thermoplastic material A.

2. Hollow-chamber profile (1) according to claim 1, **characterised in that** the second thermoplastic material B forms a core profile (14) which is covered at least on the surface that is exposed to the weather of the outer wall (2) that is exposed to the weather and preferably on the surface that faces a room of the outer wall (3) that faces a room by a cover layer (14) of the first thermoplastic material A.

3. Hollow-chamber profile (1) according to claim 1 or claim 2, **characterised in that** the thermoplastic material B has a Vicat softening temperature, measured in accordance with DIN EN ISO 306 (method B 50), of at least 95°C and/or the thermoplastic material B has a Vicat softening temperature, measured in accordance with DIN EN ISO 306 (method B 50), which is at least 15 K higher than that of the thermoplastic material A.

4. Hollow-chamber profile (1) according to any one of claims 1 to 3, **characterised in that** the thermoplastic material B comprises reinforcing fibres.

5. Hollow-chamber profile (1) according to any one of claims 1 to 4, **characterised in that** the first thermoplastic material A is rigid PVC (PVC-U) and the second thermoplastic material B is selected from the group consisting of ASA, ABS, post-chlorinated PVC (PVC-C) and mixtures of these polymers, in particular with rigid PVC (PVC-U).

6. Hollow-chamber profile (1) according to any one of claims 1 to 5, **characterised in that** the hollow-chamber profile (1) has been produced by coextrusion of the first thermoplastic material A and the second thermoplastic material B.

7. Hollow-chamber profile (1) according to any one of claims 1 to 6, **characterised in that** the outer wall (2) that is exposed to the weather and/or the outer wall (3) that faces a room is/are dyed a dark colour and/or is/are provided with a dark film, colour or coating and/or is/are coextruded with a dark layer.

## Revendications

1. Profilé de chambre creuse (1), en particulier profilé de fenêtre ou de porte, en matière synthétique thermoplastique avec une paroi extérieure côté exposé aux intempéries (2) et une paroi extérieure côté pièce (3) et au moins une chambre creuse (4, 5) jouxtant le côté exposé aux intempéries (2), dans lequel la paroi extérieure côté exposé aux intempéries (2) comprend une première matière synthétique thermoplastique A et au moins une autre cloison (6, 6', 6") du profilé de chambre creuse (1) comprend une deuxième matière synthétique thermoplastique B, dans lequel la deuxième matière synthétique thermoplastique B présente une température de ramollissement Vicat, mesurée selon la norme DIN EN ISO 306 (B 50), plus élevée d'au moins 5 K que la première matière synthétique thermoplastique A et la deuxième matière synthétique thermoplastique B a une température de ramollissement Vicat, mesurée selon la norme DIN EN ISO 306 (B 50), d'au moins 85 °C,
**caractérisé en ce que**
la paroi extérieure côté exposé aux intempéries (2) est formée en totalité à partir de la première matière synthétique thermoplastique A ou la surface côté exposé aux intempéries de la paroi extérieure côté exposé aux intempéries (2) est formée par une couche (15) composée de la première matière synthétique thermoplastique A.

2. Profilé de chambre creuse (1) selon la revendication 1, **caractérisé en ce que** la deuxième matière synthétique thermoplastique B forme un profilé central (14), qui est recouvert par une couche de recouvrement (14) composée de la première matière synthétique thermoplastique A au moins sur la surface côté exposé aux intempéries de la paroi extérieure côté exposé aux intempéries (2) et de manière préférée sur la surface côté pièce de la paroi extérieure côté pièce (3).

3. Profilé de chambre creuse (1) selon la revendication 1 ou la revendication 2, **caractérisé en ce que** la matière synthétique thermoplastique B possède une température de ramollissement Vicat, mesurée selon la norme DIN EN ISO 306 (procédé B 50), d'au moins 95 °C et/ou la matière synthétique thermoplastique B présente une température de ramollissement Vicat, mesurée selon la norme DIN EN ISO 306 (procédé B 50), plus élevée d'au moins 15 K que la matière synthétique thermoplastique A.

4. Profilé de chambre creuse (1) selon l'une quelconque des revendications 1 à 3, **caractérisé en ce que** la matière synthétique thermoplastique B comprend des fibres de renforcement.

5. Profilé de chambre creuse (1) selon l'une quelconque des revendications 1 à 4, **caractérisé en ce que** la première matière synthétique thermoplastique A Hart-PVC (PVC-U) et la deuxième matière synthétique thermoplastique B sont sélectionnées parmi le groupe consistant en ASA, ABS, PVC chloré ultérieurement (PVC-C) et de mélanges desdits polymères, en particulier avec du PVC dur (PVC-U).

6. Profilé de chambre creuse (1) selon l'une quelconque des revendications 1 à 5, **caractérisé en ce que** le profilé de chambre creuse (1) a été fabriqué par coextrusion de la première matière synthétique thermoplastique A et de la matière synthétique thermoplastique B.

7. Profilé de chambre creuse (1) selon l'une quelconque des revendications 1 à 6, **caractérisé en ce que** la paroi extérieure côté exposé aux intempéries (2) et/ou la paroi extérieure côté pièce (3) sont colorées en foncé et/ou sont pourvues d'un film, d'une couleur ou d'un revêtement foncé/foncée et/ou sont coextrudées avec une couche foncée.
